# FASCICULE DE BREVET EUROPEEN

(11) **EP 3 168 695 B1**
(45) Date de publication et mention de la délivrance du brevet: **10.03.2021**
(21) Numéro de dépôt: 15194568.0
(22) Date de dépôt: 13.11.2015
(51) Int. Cl.: G04C 3/10, G04G 3/02, G06F 1/08, G04D 7/00

(54) **PROCÉDÉ DE TEST DE LA MARCHE D'UNE MONTRE À QUARTZ**
TESTVERFAHREN FÜR GANGGENAUIGKEIT EINER QUARTZUHR
METHOD FOR TESTING THE PERFORMANCE OF A QUARTZ WATCH

(43) Date de publication de la demande: 17.05.2017
(73) Titulaire: ETA SA Manufacture Horlogère Suisse, 2540 Grenchen (CH)
(72) Inventeur: Klopfenstein, François, 2800 Delémont (CH); Godat, Yves, 2087 Cornaux (CH); Jeannet, Nicolas, 2019 Chambrelien (CH)
(74) Mandataire: Giraud, Eric

(56) Documents cités:
- EP-A1- 0 427 077
- EP-A1- 0 711 040
- EP-A1- 1 089 145
- US-A- 4 761 771
- US-A- 4 763 309

## Description

### DOMAINE TECHNIQUE

La présente invention concerne un procédé de test de la marche ou fonctionnement d'une montre électronique, telle qu'une montre à quartz.

L'invention concerne également un dispositif base de temps d'un circuit horloger intégrant un mode de test pour la mesure accélérée de la fréquence de cadencement ou de marche d'une montre électronique.

### ARRIERE-PLAN TECHNOLOGIQUE

En production industrielle, il est difficile de produire des oscillateurs ayant une fréquence de référence bien définie, afin d'obtenir, en sortie d'une série de diviseurs, des impulsions de cadencement à une fréquence unité de référence, telle qu'à 1 Hz. Il est principalement prévu de réaliser de tels oscillateurs au terme de la phase de production avec une fréquence de référence dans une bande de fréquences légèrement supérieure. Ceci permet sur des périodes de base ou d'inhibition, par exemple de durée de l'ordre d'une minute, d'inhiber volontairement une ou plusieurs impulsions d'horloge par un circuit d'inhibition pour corriger en moyenne la fréquence de référence.

Il peut aussi être envisagé pour améliorer la précision de fréquence de cadencement de la base de temps d'augmenter la période d'inhibition, mais l'erreur maximale entre deux mesures de temps augmente proportionnellement au facteur d'augmentation de la période d'inhibition. En augmentant la période d'inhibition pour augmenter la précision, cela ne permet pas de vérifier la fréquence de cadencement précisément sur une courte période. Le temps de test ne peut pas être déterminé seulement sur la base d'un certain nombre de périodes d'inhibition successives, ce qui constitue un inconvénient.

Dans la demande de brevet CH 707 285 A2, il est décrit un procédé de réglage d'un oscillateur à quartz pour une montre électronique. Pour ce faire, il est prévu d'inhiber certaines impulsions sur une période définie. Avec le procédé décrit, il est possible d'augmenter la précision du mouvement horloger électronique tout en assurant qu'il puisse être certifié avec succès par un organisme de certification, tel qu'au COSC en Suisse. Cependant il n'est pas prévu de pouvoir configurer le circuit horloger pour passer dans un mode de test accéléré, ce qui constitue un inconvénient.

On peut citer la demande de brevet WO 2014/095538 A2, qui décrit un circuit chronomètre thermo-compensé. La montre électronique comprend au moins un moteur électrique pour entraîner notamment des aiguilles pour l'affichage de l'heure. Elle comprend encore un module horloger avec une base de temps, qui fournit un signal d'horloge relié à une chaîne de diviseurs pour fournir un signal de référence de cadencement pour commander le moteur électrique. Le module horloger comprend encore un circuit de mesure et de correction entre la base de temps et les diviseurs, afin de fournir un signal de compensation thermique au module horloger. Il n'est par contre pas défini un module horloger susceptible d'être configuré pour pouvoir être placé dans un mode de test accéléré pour un procédé de test de la marche d'une montre électronique, ce qui constitue un inconvénient.

Pour pouvoir mesurer la bonne marche d'une montre à quartz, notamment pour déterminer sa précision temporelle sur une longue période, il doit être effectué un test de cette montre. Généralement ce test est opéré sur un équipement de mesure avec la détection des impulsions du moteur, qui est cadencé à la seconde, par un couplage magnétique. La durée d'un test en sortie de production est longue, étant donné que pour déterminer précisément la bonne marche de la montre, il doit être compté près de 4 heures de durée de test, ce qui constitue un inconvénient d'un tel test.

Un dispositif base de temps d'un circuit horloger d'une montre électronique, comprend un module horloger ayant un cristal de quartz à 32 kHz, qui fonctionne en liaison avec un circuit intégré de montre. Ce circuit intégré comprend donc un oscillateur lié au quartz, un capteur de température, un circuit de thermo-compensation, un circuit d'ajustement de fréquence d'horloge par inhibition, un générateur d'impulsions d'un moteur. Pour atteindre une haute précision, le dispositif base de temps effectue un cycle d'inhibition d'une longue période. Par exemple, un tel circuit peut opérer une inhibition à une fréquence de 16 kHz avec une résolution de ±1 impulsion d'horloge chaque 960 s, c'est-à-dire chaque 16 minutes. Cela correspond à 61 µs chaque 960 s ou 0.0636 ppm ou 2.005 sec/an.

Il y a des difficultés pratiques pour calibrer et vérifier le dispositif base de temps durant le procédé de fabrication. Selon l'art antérieur, pour vérifier la précision de fréquence de la montre, on a besoin de mesurer exactement le temps entre des impulsions du moteur pendant une relativement longue période typiquement de l'ordre de 16 minutes comme indiqué ci-devant. Ce temps long nécessite un équipement lourd et cher, qui est produit par exemple par l'entreprise Witschi Electronic AG. Cet équipement est capable de mesurer les produits par lot, par exemple un lot de 32 pièces, qui sont mesurées dans les 16 minutes. Cela correspond à une production de 2 pièces par minute, mais c'est encore relativement long pour effectuer ce test, ce qui constitue un inconvénient.

La demande de brevet EP 1 089 145 A1 décrit un procédé et un dispositif d'ajustement d'une montre électronique. La montre comprend une unité de génération d'un signal de référence avec un oscillateur à quartz, une unité de division de fréquence, une unité de mesure de température, une unité d'entraînement d'un moteur. Une unité d'ajustement de la fréquence du signal de référence en tenant compte de la température est aussi prévue. Un couplage magnétique est prévu entre un appareil de test et la montre pour effectuer le test de fonctionnement de la montre à différentes températures. Pour le test, il est tout d'abord transmis un signal de test d'oscillation de détection de température sans entraînement du moteur, ce qui permet à l'appareil de test de mesurer la fréquence de ce signal de test. Après cela, des impulsions d'entraînement du moteur sont fournies sur la base du signal d'oscillation de référence et via un diviseur de fréquence en ayant désactivé l'unité de test d'oscillation de détection de température. L'appareil de test peut mesurer la fréquence de référence. Finalement, un calcul d'erreur de fréquences est effectué. La solution de test est relativement compliquée et ne permet pas d'effectuer un test accéléré du fonctionnement de la montre, ce qui est un inconvénient.

La demande de brevet EP 0 427 077 A1 décrit une montre électronique avec des moyens pour effectuer un test de marche de la montre à moteur pas à pas d'entraînement des aiguilles. Le test de marche de la montre peut être effectué sur un appareil de contrôle par couplage inductif. Un ajustement de la fréquence de fonctionnement est effectué par inhibition d'un nombre K d'impulsions de cadencement en sortie d'un diviseur de fréquence relié à un oscillateur de référence. Un signal auxiliaire à fréquence supérieure est également fourni au signal de référence pour la mesure du fonctionnement de la marche de la montre. Cependant, rien n'est décrit pour effectuer un test accéléré du fonctionnement de la montre, ce qui est un inconvénient.

La demande de brevet EP 0 711 040 A1 décrit un générateur de fréquence à haute stabilité. Le générateur comprend un oscillateur à quartz relié à un premier diviseur, un circuit d'inhibition en sortie du premier diviseur et relié à une chaîne de division pour fournir un signal à fréquence de 1 Hz. Une compensation de l'effet de la température est opérée pour inhiber certaines impulsions d'entraînement du moteur électrique. Un oscillateur à haute fréquence est encore prévu. Une mesure de fréquence des deux oscillateurs permet de corriger la fréquence du signal de référence. Cependant, rien n'est décrit pour effectuer un test accéléré du fonctionnement de la montre, ce qui est un inconvénient.

Le brevet US 4,761,771 A décrit un appareil à base de temps électronique, qui comprend des moyens de compensation de la température. Cependant, rien n'est décrit pour effectuer un test accéléré du fonctionnement de l'appareil à base de temps, ce qui est un inconvénient

Le brevet US 4 763 309 A décrit un procédé de test pour corriger la fréquence d'oscillation en mode de test et un circuit diviseur prévu pour être contrôlé par un circuit d'inhibition. Le moteur reçoit des impulsions à 32 Hz et le signal autorisant l'inhibition, de même que le signal d'inhibition qui lui est lié, sont émis à une vitesse deux fois plus lente, soit 16 Hz. Il y a ainsi alternance entre périodes avec et sans inhibition ce qui permet de contrôler en un temps très court le rapport existant entre fréquence ajustée et fréquence non ajustée.

### RESUME DE L'INVENTION

L'invention a donc pour but principal de pallier les inconvénients susmentionnés en proposant un procédé de test de la marche ou fonctionnement d'une montre électronique, telle qu'une montre à quartz, qui permette d'accélérer drastiquement la mesure de fréquence en production par exemple tout en éliminant le besoin d'un équipement de test compliqué et cher à mettre en fonction.

A cet effet, la présente invention concerne un procédé de test de la marche ou fonctionnement d'une montre électronique, qui comprend les caractéristiques de la revendication indépendante 1.

Des étapes particulières du procédé de test sont définies dans les revendications dépendantes 2 à 8.

Un avantage du procédé de test de la marche ou fonctionnement d'une montre électronique selon l'invention réside dans le fait qu'il ne comprend que trois étapes principales pour effectuer ce test accéléré. Après configuration du module horloger dans un mode de test, et dans une première étape, il est effectué une mesure de la fréquence d'horloge générée notamment par l'oscillateur ou après au moins un étage de division de la série de diviseurs de fréquence. Cette mesure de la fréquence d'horloge est effectuée sans inhibition. Une deuxième étape est prévue pour acquérir la valeur d'inhibition actuelle, qui peut être appliquée notamment par un circuit de thermo-compensation pour inhiber un certain nombre d'impulsions d'horloge dans une période d'inhibition. Finalement, une troisième étape est prévue pour calculer la fréquence correspondante de la montre, c'est-à-dire la marche ou fonctionnement de ladite montre électronique.

Avantageusement pour effectuer le procédé de test de marche, il suffit d'accomplir les deux premières étapes sur une durée de test de l'ordre de 6 s, tout en conservant une bonne précision de mesure. Selon l'art antérieur pour garantir une bonne précision du procédé de test, il devait être compté jusqu'à 4 heures de test. Il est également tenu compte d'une valeur de correction thermique pendant la durée du procédé de test de la marche de la montre électronique. Cette température est mesurée parallèlement durant la mesure et le calcul de la fréquence de marche.

A cet effet, la présente invention concerne également un dispositif base de temps d'une montre électronique convenant à la mise en œuvre du procédé de test, qui comprend les caractéristiques de la revendication indépendante 9.

Des formes particulière d'exécution du dispositif base de temps sont définies dans les revendications dépendantes 10 à 14.

### BREVE DESCRIPTION DES FIGURES

Les buts, avantages et caractéristiques du procédé de test de la marche ou fonctionnement d'une montre électronique, ainsi que le dispositif base de temps pour la mise en œuvre du procédé de test apparaîtront mieux dans la description suivante de manière non limitative en regard des dessins sur lesquels :
- la figure 1 représente une vue schématique d'une première forme d'exécution des composants d'un dispositif base de temps pour le test du fonctionnement de la montre en coopération avec un équipement de test selon l'invention,
- la figure 2 représente une vue schématique d'une seconde forme d'exécution des composants d'un dispositif base de temps pour le test du fonctionnement de la montre en coopération avec un équipement de test selon l'invention, et
- la figure 3 représente un graphe d'impulsions fournies à au moins un moteur du dispositif base de temps avec l'énoncé de deux étapes du procédé de test de la marche de la montre électronique.

### DESCRIPTION DETAILLEE DE L'INVENTION

Dans la description suivante, tous les composants d'un dispositif base de temps d'un circuit horloger de la montre électronique ou électromécanique pour la mise en œuvre du procédé de test, qui sont bien connus d'un homme du métier dans ce domaine technique ne sont relatés que de manière simplifiée.

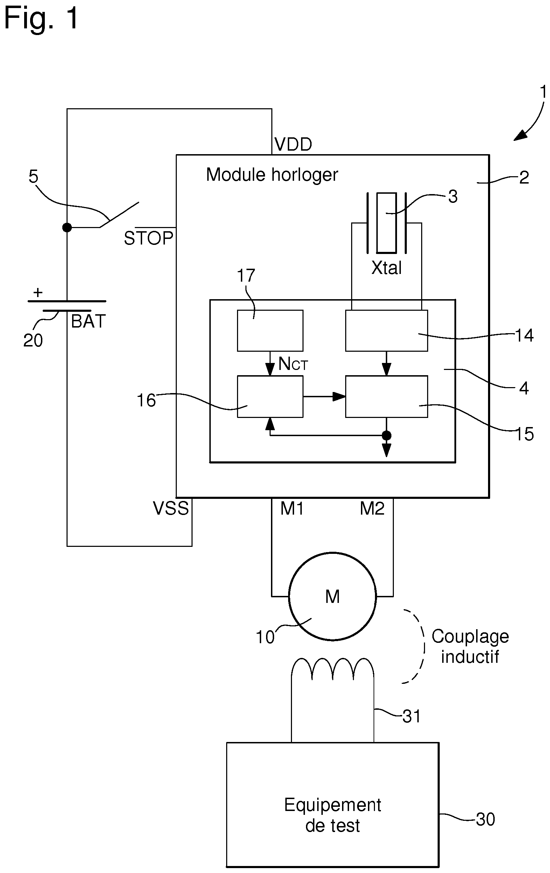

Le dispositif base de temps 1 d'un circuit horloger de la montre électronique est représenté schématiquement sur la figure 1 selon une première forme d'exécution. Ce dispositif base de temps 1 est placé sur un équipement de test 30 dans un mode de test sélectionné. Cet équipement de test 30 détecte les impulsions d'entraînement d'au moins un moteur électrique 10 pour le déplacement d'aiguilles de la montre par un couplage inductif au moyen d'une bobine 31. La détection peut être effectuée de manière courante sur un banc de test à travers le boîtier de la montre électronique. Cependant, il peut aussi être envisagé de contacter directement le circuit horloger pour effectuer le test de marche de la montre électronique avant que le dispositif base de temps 1 soit enfermé dans une boîte de montre.

Le dispositif base de temps 1 d'un circuit horloger de la montre électronique comprend principalement un module électronique horloger 2. Ce module horloger 2 comprend un résonateur à quartz 3 à 32 kHz traditionnel, qui est relié à un circuit intégré électronique 4. Il peut être utilisé pour ce module électronique horloger 2, un composant à résonateur à quartz du type Micro Crystal CM7 ou des types Micro Crystal WM-132X-C7. Cependant d'autres types de composants à résonateur à quartz ou du type MEMS peuvent aussi être utilisés pour ledit module électronique, également à d'autres fréquences que 32 kHz.

Le circuit électronique 4 comprend principalement un oscillateur de référence 14, qui est relié directement au résonateur à quartz 3 pour générer un signal périodique de référence, dont la fréquence de référence est voisine de 32 kHz. Le circuit électronique 4 comprend encore un circuit diviseur 15, qui est relié à la sortie de l'oscillateur de référence 14 et qui est composé d'un nombre D d'étages de division, où D est un nombre entier égal ou supérieur à 1. Les étages de division sont des diviseurs en série pour pouvoir diviser la fréquence du signal de référence. Le circuit diviseur 15 fournit principalement par exemple un signal de cadencement à fréquence unité (1 Hz). Ce signal de cadencement peut être encore adapté dans une unité de gestion du signal pour pouvoir transmettre un signal à impulsions d'entraînement à au moins un moteur électrique 10 connecté par deux fils à des bornes M1, M2 du module horloger 2. Une batterie 20 est également prévue pour alimenter électriquement le module horloger 2. Il peut encore être prévu un commutateur 5 pour pouvoir commander le mode de test du module horloger.

Comme indiqué dans l'état de la technique susmentionné, la fréquence normale désirée doit en principe être à une valeur exacte de 32'768 Hz pour la bonne marche de fonctionnement de la montre électronique. Cependant il est volontairement prévu, que l'oscillateur de référence fournisse un signal de référence, dont la fréquence de référence est légèrement supérieure à la fréquence normale désirée. Cette fréquence de référence est en principe calibrée pour fonctionner entre 0 et 127 ppm en dessus de la valeur attendue de la fréquence normale. Une correction de la fréquence est établie dans un des étages de division du circuit diviseur par cycle ou période de mesure en inhibant un certain nombre d'impulsions dans un des premiers étages du circuit diviseur. Ce principe est décrit en référence à la figure 1 et aux paragraphes 8 à 13 de la description de la demande de brevet EP 2 916 193 A1.

Il est à noter que le circuit électronique 4 comprend encore un circuit d'inhibition 16 pour corriger en moyenne la fréquence de référence. Z r Le circuit d'inhibition 16 reçoit le signal de cadencement du circuit diviseur 15 et agit sur le deuxième étage du circuit diviseur, où la fréquence du signal est à une fréquence voisine de 16 kHz. Il peut encore être prévu dans le circuit électronique 4, un capteur de température, un circuit de thermo-compensation 17, un circuit d'ajustement de fréquence d'horloge par inhibition, un générateur d'impulsions d'un moteur, qui reçoit le signal de cadencement du circuit diviseur. Le circuit de thermo-compensation 17 permet également d'adapter et de fournir la valeur d'inhibition N_{CT} au circuit d'inhibition 16. La gestion des signaux dans le circuit électronique 4 peut être effectuée par un processeur ou une machine d'état de manière conventionnelle.

La valeur d'inhibition N_{CT} peut être le paramètre de correction thermique. Il peut être exprimé selon la formule suivante N_{CT} = K·((F_{Q} / F_{N}) - 1), où F_{N} est la fréquence normale précise désirée (32'768 Hz) et F_{Q} est la fréquence de référence de l'oscillateur 14, qui est en général légèrement supérieure à la fréquence normale. Le facteur K est choisi pour faciliter l'implémentation dans le circuit électronique intégré 4, en tenant compte que le principe d'inhibition consiste à retirer un nombre entier d'impulsions de cadencement. Normalement la valeur d'inhibition N_{CT} est déterminée pour agir sur le 2^{e} étage de division avec la fréquence normale F_{N} divisée par deux, et la fréquence de l'oscillateur F_{Q} divisée par deux. Un nombre entier d'impulsions de cadencement à inhiber est fourni par le circuit d'inhibition 16 sur la base de la valeur N_{CT} dans chaque période d'inhibition. Cette période d'inhibition est en principe une période de base déterminée entre chaque impulsion de cadencement en sortie du circuit diviseur, notamment entre chaque impulsion d'entraînement d'au moins un moteur 10. Comme la gamme d'adaptation de l'oscillateur 14 à quartz se situe entre 0 et 127 ppm, il est possible de prendre comme valeur typique N_{CT} = K·98 ppm. Cette valeur d'inhibition est mémorisée dans un registre, qui peut être utilisé durant le mode de test.

Au moyen du circuit de thermo-compensation 17, la valeur N_{CT} est typiquement calculée de sorte à opérer une correction quadratique en x² de la fréquence F_{Q} en fonction de la température. La valeur N_{CT} est ensuite mémorisée dans un registre spécifique. De plus, dans un mode perfectionné, il est souhaité de compenser en plus des effets du 3^{e} ou 4^{e} ordre, qui peuvent être dus aux caractéristiques du résonateur ou à la non-linéarité du capteur de température. Dans ce cas, N_{CT} = a·x⁴ + b·x³ + c·x² + d·x + e, où x est relatif à la température, et e ne dépend pas de la température, mais de l'offset du quartz. Le terme c·x² concerne généralement la fréquence du quartz, dont la dépendance en température est généralement de forme parabolique avec un sommet à 25 °C. Les paramètres a, b, c, d et e peuvent être déterminés sur la base de mesures à différentes températures et/ou de connaissances théoriques ou empiriques du résonateur à quartz 3 et du capteur de température préférablement intégré dans le circuit électronique 4. Il est à noter que ce capteur de température peut lui-même être un oscillateur conçu pour générer une fréquence F_{T} ayant une dépendance en température importante et linéaire. Ces paramètres a, b, c, d et e peuvent alors être déterminés avec plusieurs mesures de la fréquence de chaque oscillateur à diverses températures. Une calibration de ces paramètres est effectuée avant le procédé de test du dispositif base de temps 1 et en principe avec des mesures à plusieurs températures, notamment à 9 températures.

Comme indiqué ci-dessus, le mode de test peut être enclenché par l'action sur un commutateur 5. Ce commutateur peut être fermé pour entrer dans le mode de test automatiquement ou manuellement par l'action notamment sur un bouton ou couronne d'un mouvement chronographe de la montre électronique. Il peut aussi être prévu que le commutateur est fermé à l'enclenchement de la batterie 20. Pour l'entrée dans un mode de test automatique, il peut être prévu d'écrire un registre mémoire dans le module horloger 2 pour l'activation pendant un laps de temps défini du mode de test. Le procédé de test dans le mode de test est accéléré selon l'invention comme précisé par la suite, et d'une durée pouvant être par exemple de l'ordre de 6 à 7 secondes.

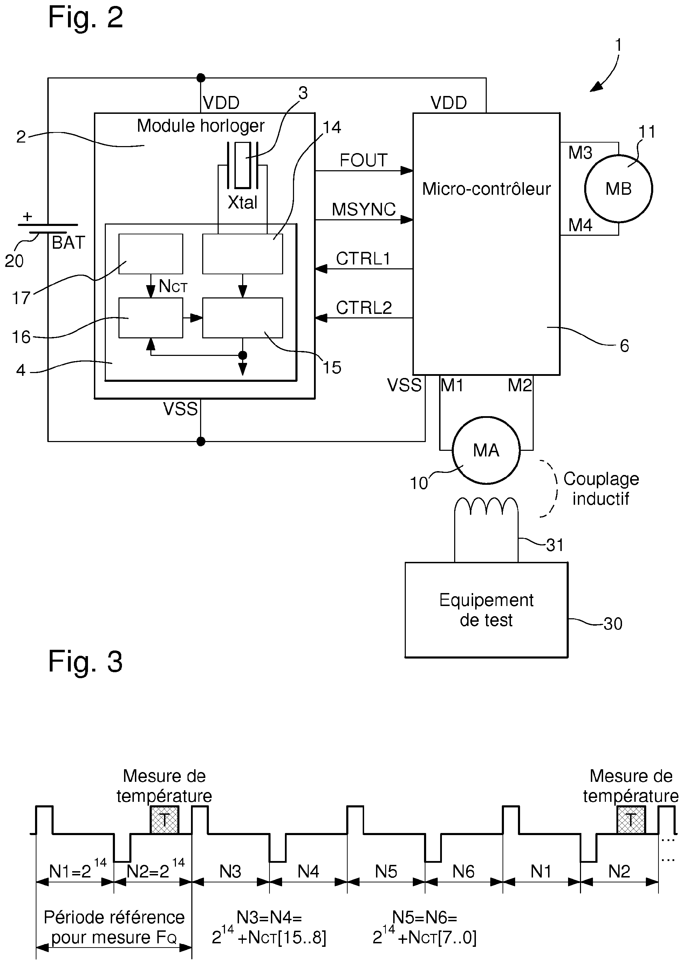

Une seconde forme d'exécution du dispositif base de temps 1 d'un circuit horloger de la montre électronique est représentée schématiquement sur la figure 2. Dans cette seconde forme d'exécution, le dispositif base de temps 1 peut aussi être placé sur un équipement de test 30 dans un mode de test sélectionné, où un couplage magnétique au moyen d'une bobine 31 permet de détecter les impulsions d'entraînement d'au moins un moteur électrique 10, 11 pour le déplacement d'aiguilles de la montre. Il peut aussi être envisagé de relier directement le circuit horloger pour effectuer le test de marche de la montre électronique avant de l'enfermer dans une boîte de montre.

Le dispositif base de temps 1 du circuit horloger de la montre électronique comprend un module horloger 2, qui comprend un résonateur à quartz 3 à 32 kHz. Ce résonateur 3 est relié à un circuit intégré électronique 4. Ce circuit électronique 4 comprend un oscillateur de référence 14, qui est relié directement au résonateur à quartz 3 pour générer un signal de référence. Normalement, la fréquence normale de ce signal de référence est voisine de 32 kHz, mais le signal de référence est à une fréquence de référence calibrée pour fonctionner entre 0 et 127 ppm au-dessus de la valeur attendue de la fréquence normale.

Le circuit électronique 4 comprend encore un circuit diviseur 15, qui est relié à la sortie de l'oscillateur de référence 14 et qui est composé d'un certain nombre D d'étages de division, qui sont des diviseurs en série pour pouvoir diviser la fréquence du signal de référence. Principalement comme pour la première forme d'exécution, le circuit diviseur 15 peut comprendre jusqu'à 15 étages de division, c'est-à-dire 15 diviseurs par deux reliés les uns à la suite des autres depuis la sortie de l'oscillateur jusqu'à la sortie du module horloger 2. Le signal de cadencement à la sortie du dernier étage de division du circuit diviseur du module horloger 2 peut être à une fréquence proche de la fréquence unité (1 Hz).

Dans cette seconde forme d'exécution, le dispositif base de temps 1 comprend encore un microcontrôleur 6 relié au module horloger 2. Une batterie 20 alimente électriquement le module horloger 2 et le microcontrôleur 6. Le microcontrôleur 6 peut recevoir le signal de cadencement MSYNC du module horloger 2, ainsi qu'un signal d'horloge FOUT, qui peut être soit le signal de référence de l'oscillateur ou le signal de sortie du premier étage de division ou second étage de division du circuit diviseur 15. Ce signal de cadencement MSYNC peut être encore adapté dans le microcontrôleur 6 pour transmettre un premier signal à impulsions à un premier moteur MA 10 à des bornes M1, M2 du microcontrôleur 6, et un second signal à impulsions à un second moteur MB 11 à des bornes M3, M4. Dans un fonctionnement normal, le premier moteur peut être cadencé à une fréquence de 1 Hz pour l'avance d'une ou deux aiguilles, alors que le second moteur peut être cadencé à une fréquence supérieure ou inférieure à 1 Hz par exemple pour entraîner d'autres aiguilles. Le microcontrôleur 6 peut être encore contrôlé par un oscillateur RC, qui au besoin peut être déconnecté dans le mode de test sélectionné.

Il peut aussi être prévu que le microcontrôleur 6 permette au circuit électronique 4 du module horloger 2 d'entraîner directement par le signal de cadencement MSYNC, le premier moteur 10 utilisé pour le contrôle de la fréquence en relation à l'équipement de test 30.

Le microcontrôleur 6 commande également par un premier signal de commande CTRL1, qui peut être une ligne de communication série, le module horloger 2 afin d'adapter certains paramètres dudit module horloger à la suite d'un test effectué ou pour une opération de calibrage. Le microcontrôleur 6 transmet également un second signal de commande CTRL2, qui est un signal de commande automatique du début et de fin du mode de test.

Le procédé de test de la marche ou fonctionnement de la montre électronique sera maintenant décrit sur la base de la première forme d'exécution ou de la seconde forme d'exécution du dispositif base de temps 1 du circuit horloger. De préférence, le premier moteur 10 est cadencé à une fréquence de base, qui peut être une fréquence de l'ordre de 1 Hz. Il reçoit donc un signal à impulsions pour la rotation de son rotor. Le moteur est du type moteur Lavet avec deux pôles du rotor pour sa rotation. Une période de mesure est définie selon l'inverse de la fréquence de base et dans ce cas de l'ordre de 1 seconde en principe entre deux impulsions moteur. Cela définit une période de base ou d'inhibition, qui dépend du signal de cadencement en sortie du circuit diviseur 15. Comme la mesure est effectuée à chaque impulsion générée d'entraînement d'au moins un moteur, la période de mesure peut quelque peu varier, si une inhibition est effectuée par période de mesure.

Le procédé comprend de manière générale trois étapes principales de mesure de la bonne marche de la montre électronique dans un cycle de mesure. Une première étape de mesure est effectuée pendant un premier nombre M de périodes de mesure sans inhibition, où M est un nombre entier, qui est égal ou supérieur à 1. Une seconde étape de mesure est effectuée à la suite des M périodes de mesure, pendant un second nombre N de périodes de mesure avec inhibition, où N est un nombre entier égal ou supérieur à 1. Dans une troisième étape au terme des N périodes de mesure, un simple algorithme est appliqué notamment par l'équipement de mesure pour calculer la fréquence de l'oscillateur 14 et la valeur d'inhibition pour déterminer la fréquence de montre exacte sur la base des mesures effectuées dans les M + N périodes de mesure. La fréquence de l'oscillateur 14 peut être directement calculée durant les M périodes de mesure.

Dans un mode de réalisation préféré, il est prévu un cycle de mesure à 6 secondes. Le premier nombre M de périodes de mesure est égal à 2, et le second nombre N de périodes de mesure successives est égal à 4 comme expliqué ci-après. Comme on peut le remarquer sur le graphe de la figure 3, la période de base ou d'inhibition est de durée Tb, qui est égale à environ 1 seconde, mais varie quelque peu en fonction des durées des M périodes de mesure ou des N périodes de mesure.

Pour la première étape sans inhibition et étant donné que l'action avec ou sans inhibition s'effectue au 2^{e} étage du circuit diviseur, le nombre d'impulsions pour la première période de mesure T1 entre la première impulsion et la seconde impulsion du moteur est un nombre N1 égal à 2¹⁴ impulsions, ce qui correspond à 16'384 impulsions. Le nombre d'impulsions dans la seconde période de mesure T2 successive entre la seconde impulsion et la troisième impulsion du moteur est un nombre N2 égal à 2¹⁴ impulsions, ce qui correspond à 16'384 impulsions. La fréquence F_{Q} du signal de référence de l'oscillateur peut être calculée dans la période de mesure de référence T1 + T2 de 2 secondes entre les première et troisième impulsions moteurs. L'équipement de mesure peut ainsi facilement calculer la fréquence d'horloge exacte F_{Q} de l'oscillateur de référence 14.

Il est à noter que le calcul de cette fréquence de référence pourrait être fait sur une période de base à 1 seconde par une mesure entre les première et seconde impulsions moteur. Cependant dans ce cas, la polarité du moteur ne pourrait pas être la même, ce qui peut légèrement affecter la détection du premier flanc de l'impulsion moteur par le capteur inductif dans l'équipement de mesure. Ainsi on préfère la mesure sur une période de 2 secondes entre les première et troisième impulsions moteurs, selon un nombre d'impulsions pair ou impair de même polarité comme montré en figure 3.

Pour la seconde étape avec inhibition, il est utilisé la valeur binaire d'inhibition N_{CT}, qui est un mot binaire de P bits, où P est un nombre entier de 16 bits [15..0]. Le dispositif base de temps 1 transmet cette valeur courante d'inhibition thermo-compensée au circuit d'inhibition 16. C'est généralement le circuit de thermo-compensation 17, qui fournit cette valeur d'inhibition N_{CT}. Ainsi dans les troisième et quatrième périodes de mesure T3 et T4 successives représentées par N3 et N4, il est ajouté au nombre d'impulsions de base, notamment aux 2¹⁴ impulsions, les 8 bits les plus significatifs (MSB) de la valeur d'inhibition N_{CT}[15..8] de 8 à 15. Les 8 bits les plus significatifs de la valeur d'inhibition N_{CT} sont donc ajoutés pour le nombre N3 entre les troisième et quatrième impulsions moteur et pour le nombre N4 entre les quatrième et cinquième impulsions moteur.

Il est à noter qu'en prenant la valeur d'inhibition, les troisième et quatrième périodes de mesure T3 et T4 sont chacune plus grande que la durée T1 ou T2. Les 8 bits les plus significatifs (MSB) fournis de la valeur d'inhibition N_{CT}[15..8] donnent l'équation N_{CT}[15..8] = INT(N1·((T3/T1) - 1)), où T3 est la troisième période de mesure et T1 est la première période de mesure. Dans cette équation, INT prélève la partie entière du contenu entre parenthèses.

Dans les cinquième et sixième périodes de mesure T5 et T6 successives représentées par N5 et N6, il est ajouté au nombre d'impulsions de base, notamment aux 2¹⁴ impulsions, les 8 bits les moins significatifs (LSB) de la valeur d'inhibition N_{CT}[7..0] de 0 à 7. Les 8 bits les moins significatifs de la valeur d'inhibition N_{CT} sont donc ajoutés pour le nombre N5 entre la cinquième et sixième impulsions moteur et pour le nombre N6 entre la sixième et septième impulsions moteur. Comme précédemment, les 8 bits les moins significatifs (LSB) de la valeur d'inhibition N_{CT}[7..0] fournis donnent l'équation N_{CT}[7..0] = INT(N1·((T5/T1) - 1)), où T5 est la cinquième période de mesure et T1 est la première période de mesure. En connaissant la fréquence d'horloge exacte de la première étape, l'équipement de mesure sera capable de déterminer les valeurs d'inhibition à la seconde étape et reconstruire la valeur N_{CT} d'inhibition actuelle thermo-compensée.

Durant la troisième étape, un simple algorithme est appliqué par l'équipement de mesure pour calculer la fréquence de montre exacte, qui est appelée usuellement la marche de la montre. Ici on ne décrit pas en détail comment le dispositif base de temps utilise la valeur d'inhibition N_{CT}, qui est décrit dans la demande de brevet EP 2 916 193 A1. Cependant on rappelle que la valeur binaire N_{CT} sur 16 bits permet d'obtenir une précision d'ajustement de ±0.12 s/an. Auparavant avec une telle haute précision en production selon l'état de la technique, cela nécessitait plus de 4 heures de test. Alors que la présente invention réduit en théorie ce temps à 6 secondes. Cependant dans un cas réel, la mesure sur 6 secondes sera légèrement moins précise due à la gigue de l'oscillateur et à d'autres erreurs de cadencement dans l'acquisition des flancs inductifs d'impulsions moteur. Pratiquement la précision de mesure peut être augmentée en augmentant le temps de mesure, préférablement dans des cycles de mesure à multiple de 6 secondes.

Bien entendu, pour effectuer une mesure précise, il est important de maîtriser la température au moment de la mesure et de fournir une valeur de correction thermique mise à jour pour pouvoir effectuer ce test accéléré. Comme représenté à la figure 3, il peut être envisagé de mesurer la température par un capteur non représenté à chaque deuxième période T2 de mesure d'un cycle de mesure. Afin que l'équipement puisse vérifier la stabilité de la fréquence et indirectement de la température pendant le test, la fréquence peut aussi être évaluée sur 5 doubles périodes de 2 secondes chacune pour les première et seconde périodes de mesure T1 + T2, pour les seconde et troisième périodes de mesure T2 + T3, pour les troisième et quatrième périodes de mesure T3 + T4, pour les quatrième et cinquième périodes de mesure T4 + T5, et pour les cinquième et sixième périodes de mesure T5 + T6. La mesure de la température est effectuée préférablement entre la deuxième et troisième périodes de mesure. Une fois que l'équipement de test aura déterminé la valeur Nct, il sera également en mesure de calculer exactement la fréquence pour chacune des 5 périodes susmentionnées et d'en déduire la stabilité de la fréquence. La valeur moyenne de ces 5 mesures peut aussi être calculée pour atténuer l'effet de la gigue de l'oscillateur.

Comme précédemment indiqué, il est important de mesurer au début des périodes pour N1, N3, N5 ou N2, N4, N6 pour tenir compte du changement de polarité d'entraînement du rotor du moteur électrique.

Une fois le test effectué de la marche de la montre électronique, il peut être prévu de fournir une correction de la marche de la montre. La correction d'un ou plusieurs paramètres peut être transmise sans fil en direction du circuit de commande de la montre, qui peut agir comme récepteur de données. Il peut aussi être prévu de communiquer par un canal optique préférablement dans les domaines visibles ou infrarouge, éventuellement en traversant une partie transparente de l'habillage de la montre. La correction de la valeur d'inhibition peut également s'effectuer par un contact électrique du dispositif base de temps ou par transmission sans fil.

A partir de la description qui vient d'être faite, plusieurs variantes de réalisation du procédé de test de la marche ou fonctionnement d'une montre électronique, ainsi que le dispositif base de temps de la montre électronique pour sa mise en œuvre peuvent être conçues par l'homme du métier sans sortir du cadre de l'invention définie par les revendications. Il peut être effectué plusieurs séries de cycles de mesure pour déterminer la fréquence de référence de l'oscillateur et la correction de la valeur d'inhibition. La première étape de mesure peut comprendre une seule période de mesure, alors que la seconde étape de mesure peut comprendre une seule période de mesure ou deux périodes de mesure. Avec deux périodes de mesure dans la seconde étape, des bits de poids forts de la valeur d'inhibition sont transmis au circuit d'inhibition dans une première période de mesure, alors que des bits de poids faibles de la valeur d'inhibition sont transmis au circuit d'inhibition dans une seconde période de mesure. Au lieu d'un moteur électrique, le module horloger peut commander également un dispositif d'affichage d'une heure.

## Revendications

1. Procédé de test de la marche d'une montre électronique à dispositif base de temps (1) sur un équipement de test (30), le dispositif base de temps (1) étant configuré pour pouvoir passer d'un mode de fonctionnement normal à un mode de test, et comprenant au moins un module horloger (2) alimenté par une source d'énergie (20), le module horloger (2) comprenant un résonateur à quartz (3) relié à un circuit électronique (4) muni d'un oscillateur de référence (14) relié directement au résonateur à quartz (3) pour fournir un signal de référence à un circuit diviseur (15) ayant un nombre D d'étages de division, où D est un nombre entier égal ou supérieur à 1, le circuit diviseur (15) étant contrôlé par un circuit d'inhibition (16) commandé par une valeur d'inhibition (N_{CT}) et fournissant un signal de cadencement à fréquence divisée pour la commande d'au moins un moteur électrique (10, 11) ou d'un dispositif d'affichage d'une heure,
**caractérisé en ce que** le procédé de test comprend les étapes de :
- dans une première étape, mesurer la fréquence du signal de référence de l'oscillateur de référence dans un premier nombre M de périodes de mesure sans inhibition, où M est un nombre entier, qui est égal ou supérieur à 1, et chaque période de mesure est définie entre deux impulsions du signal de cadencement,
- dans une seconde étape, acquérir la valeur d'inhibition (N_{CT}) pour le circuit d'inhibition, la valeur d'inhibition (N_{CT}) étant un mot binaire de P bits, où P est un nombre entier égal à 16 bits, qui est fourni au circuit d'inhibition (16), afin d'inhiber un certain nombre d'impulsions dans le circuit diviseur (15), et mesurer la fréquence d'un signal relatif au signal de référence avec inhibition dans un second nombre N de périodes de mesure successives avec inhibition, où N est un nombre entier, qui est égal ou supérieur à 1, le circuit d'inhibition (16) agissant sur un deuxième étage de division du circuit diviseur (15) pendant les N périodes de mesure, 8 bits de poids forts de la valeur d'inhibition N_{CT}[15..8] étant tout d'abord transmis au circuit d'inhibition (16) pour agir pendant une ou plusieurs des N périodes de mesure, alors que 8 bits de poids faibles N_{CT}[7..0] de la valeur d'inhibition sont transmis au circuit d'inhibition (16) pour agir pendant une ou plusieurs périodes successives et restantes des N périodes de mesure de manière à déterminer la valeur d'inhibition en connaissant la fréquence du signal de référence, et
- dans une troisième étape, calculer la fréquence exacte de marche du dispositif base de temps (1) par un algorithme dédicacé dans l'équipement de test (30) sur la base des mesures des première et seconde étapes après M + N périodes de mesure, qui définit un cycle de mesure.

2. Procédé de test selon la revendication 1, pour lequel le dispositif base de temps comprend au moins un moteur électrique (10, 11) et l'équipement de test (30) est adapté à déterminer des impulsions de cadencement du moteur électrique par contact électrique direct ou par couplage inductif par une bobine de couplage inductif (31), **caractérisé en ce que** chacune des M périodes de mesure et chacune des N périodes de mesure des première et seconde étapes sont définies entre deux impulsions successives de cadencement du moteur dans un cycle de mesure à M + N périodes.

3. Procédé de test selon l'une des revendications précédentes, **caractérisé en ce que** dans les première et seconde étapes, chacune des M périodes de mesure est de durée inférieure à chacune des N périodes de mesure suite à l'inhibition d'un certain nombre d'impulsions dans le circuit diviseur (15).

4. Procédé de test selon la revendication 1, pour lequel le premier nombre M est égal à 2, et le second nombre N est égal à 4 pour définir un cycle de mesure proche de 6 secondes, et pour lequel le circuit diviseur (15) comprend 15 étages de division, c'est-à-dire 15 diviseurs par deux reliés les uns à la suite des autres depuis une sortie de l'oscillateur de référence (14) jusqu'à la sortie du module horloger (2), **caractérisé en ce que** dans la première étape de mesure, la première période de mesure T1 et la seconde période de mesure T2 sont chacune égale à la fréquence du signal de référence de l'oscillateur (14) divisée par 2¹⁵, **en ce que** dans la seconde étape de mesure, les deux premières périodes de mesure T3 et T4 des 4 périodes de mesure avec les 8 bits de poids forts N_{CT}[15..8] de la valeur d'inhibition fournis au second étage du circuit diviseur (15) sont chacune égale à T1·((N_{CT}[15..8]/2¹⁴) + 1), et **en ce que** dans la seconde étape de mesure, les deux dernières périodes de mesure T5 et T6 des 4 périodes de mesure sont chacune égale à T1·((N_{CT}[7..0]/2¹⁴) + 1).

5. Procédé de test selon l'une des revendications précédentes, **caractérisé en ce que** plusieurs cycles de mesure sont effectués pour la détermination de la fréquence du signal de référence de l'oscillateur de référence (14) et la détermination de la valeur d'inhibition.

6. Procédé de test selon l'une des revendications précédentes, **caractérisé en ce qu'**une mesure de température en liaison avec un circuit de thermo-compensation (17) de la valeur d'inhibition du circuit électronique (4) est effectuée dans au moins une période de mesure des première et seconde étapes de mesure ou dans chaque période de mesure.

7. Procédé de test selon la revendication 6, **caractérisé en ce qu'**une stabilité de la fréquence de marche et de la température est évaluée sur 5 doubles périodes de mesure dans les première et seconde étapes de mesure à savoir pour les première et seconde périodes de mesure T1 + T2, pour les seconde et troisième périodes de mesure T2 + T3, pour les troisième et quatrième périodes de mesure T3 + T4, pour les quatrième et cinquième périodes de mesure T4 + T5, et pour les cinquième et sixième périodes de mesure T5 + T6.

8. Procédé de test selon l'une des revendications précédentes, **caractérisé en ce qu'**une correction de la valeur d'inhibition du dispositif base de temps (1) peut être effectuée au terme du procédé de test.

9. Dispositif base de temps (1) d'une montre électronique convenant à la mise en oeuvre du procédé de test selon l'une des revendications précédentes, **caractérisé en ce que** le dispositif base de temps (1) est configuré pour pouvoir passer d'un mode de fonctionnement normal à un mode de test, et comprend au moins un module horloger (2) alimenté par une source d'énergie (20), **en ce que** le module horloger (2) comprend un résonateur à quartz (3) relié à un circuit électronique (4) muni d'un oscillateur de référence (14) relié directement au résonateur à quartz (3) pour fournir un signal de référence à un circuit diviseur (15) ayant un nombre D d'étages de division, où D est un nombre entier égal ou supérieur à 1, le circuit diviseur (15) étant contrôlé par un circuit d'inhibition (16) commandé par une valeur d'inhibition (N_{CT}), qui est un mot binaire de P bits, où P est un nombre entier égal à 16 bits, le circuit d'inhibition (16) agissant sur un deuxième étage de division du circuit diviseur (15), le circuit d'inhibition (16) étant agencé pour fournir 8 bits de poids forts de la valeur d'inhibition dans des premières périodes de mesure successives et pour fournir 8 bits de poids faibles de la valeur d'inhibition dans des secondes périodes de mesure successives, et fournissant un signal de cadencement à fréquence divisée pour commander au moins un moteur électrique (10, 11).

10. Dispositif base de temps (1) selon la revendication 9, **caractérisé en ce que** le nombre D d'étages de division est égal à 15 pour diviser la fréquence du signal de référence de l'oscillateur (14) par l'intermédiaire du circuit diviseur (15) à travers 15 diviseurs par deux en série pour fournir le signal de cadencement à impulsions au moteur électrique (10).

11. Dispositif base de temps (1) selon la revendication 10, **caractérisé en ce que** la valeur d'inhibition, qui est un mot binaire sur 16 bits, est mémorisée dans un registre du circuit électronique (4) pour être fournie au circuit d'inhibition (16), qui agit sur le second étage de division.

12. Dispositif base de temps (1) selon la revendication 9, **caractérisé en ce que** le dispositif base de temps (1) est configuré pour entrer dans un mode test par l'action d'un commutateur (5) manuellement ou automatiquement.

13. Dispositif base de temps (1) selon la revendication 9, **caractérisé en ce que** le dispositif base de temps (1) comprend un microcontrôleur (6) relié en sortie du module horloger (2) pour commander deux moteurs électriques (10, 11), et **en ce que** le microcontrôleur (6) est prévu pour transmettre un signal de commande automatique au module horloger (2) pour définir le début et la fin du mode de test, afin de permettre à un des moteurs d'être commandé par le signal de cadencement fourni par le module horloger (2).

14. Dispositif base de temps (1) selon la revendication 9, **caractérisé en ce que** le circuit électronique (4) comprend un processeur pour piloter directement le cadencement des impulsions d'un moteur (10).

## Patentansprüche

1. Testverfahren für die Ganggenauigkeit einer elektronischen Uhr mit einer Zeitbasisvorrichtung (1) auf einer Testausrüstung (30), wobei die Zeitbasisvorrichtung (1) konfiguriert ist, um von einem normalen Funktionsmodus in einen Testmodus überzugehen, und mindestens ein Uhrenmodul (2) umfassend, das durch eine Energiequelle (20) versorgt wird, wobei das Uhrenmodul (2) einen Quarzresonator (3) umfasst, der an eine elektronische Schaltung (4) angeschlossen ist, die mit einem Referenzoszillator (14) versehen ist, der direkt an den Quarzresonator (3) angeschlossen ist, um ein Referenzsignal für eine Divisorschaltung (15) bereitzustellen, die eine Anzahl D an Divisionsstufen aufweist, wobei D eine ganze Zahl gleich oder größer als 1 ist, wobei die Divisorschaltung (15) durch eine Inhibitionsschaltung (16) kontrolliert wird, die durch einen Inhibitionswert (N_{CT}) gesteuert wird, und ein Taktsignal mit dividierter Frequenz zur Steuerung mindestens eines Elektromotors (10, 11) oder einer Anzeigevorrichtung einer Uhrzeit bereitstellt,
**dadurch gekennzeichnet, dass** das Testverfahren die folgenden Schritte umfasst:
- in einem ersten Schritt Messen der Frequenz des Referenzsignals des Referenzoszillators in einer ersten Anzahl M an Messzeiträumen ohne Inhibition, wobei M eine ganze Zahl gleich oder größer als 1 ist, und jeder Messzeitraum zwischen zwei Impulsen des Taktsignals definiert ist,
- in einem zweiten Schritt Erfassen des Inhibitionswerts (N_{CT}) für die Inhibitionsschaltung, wobei der Inhibitionswert (N_{CT}) ein binäres Wort mit P Bits ist, wobei P eine ganze Zahl gleich 16 Bits ist, die der Inhibitionsschaltung (16) bereitgestellt wird, um eine bestimmte Anzahl an Impulsen in der Divisorschaltung (15) zu inhibieren, und die Frequenz eines Signals in Bezug auf das Referenzsignal mit Inhibition in einer zweiten Anzahl N an aufeinanderfolgenden Messzeiträumen mit Inhibition zu messen, wobei N eine ganze Zahl ist, die gleich oder größer als 1 ist, wobei die Inhibitionsschaltung (16) auf eine zweite Divisionsstufe der Divisorschaltung (15) während der N Messzeiträume wirkt, wobei 8 hochwertige Bits des Inhibitionswerts N_{CT}[15..8] zunächst zu der Inhibitionsschaltung (16) übertragen werden, um während eines oder mehrerer der N Messzeiträume zu wirken, während 8 geringwertige Bits N_{CT}[7..0] des Inhibitionswerts zu der Inhibitionsschaltung (16) übertragen werden, um während eines oder mehrerer aufeinanderfolgender und verbleibender der N Messzeiträume zu wirken, um den Inhibitionswert unter Kenntnis der Frequenz des Referenzsignals zu bestimmen, und
- in einem dritten Schritt Berechnen der genauen Gangfrequenz der Zeitbasisvorrichtung (1) durch einen gewidmeten Algorithmus in der Testausrüstung (30) auf der Basis der Messungen des ersten und zweiten Schritts nach M + N Messzeiträumen, die einen Messzyklus definiert.

2. Testverfahren nach Anspruch 1, wobei die Zeitbasisvorrichtung mindestens einen Elektromotor (10, 11) umfasst, und die Testausrüstung (30) angepasst ist, um Taktimpulse des Elektromotors durch direkten elektrischen Kontakt oder durch induktive Kopplung durch eine induktive Kopplungsspule (31) zu bestimmen, **dadurch gekennzeichnet, dass** jeder der M Messzeiträume und jeder der N Messzeiträume des ersten und zweiten Schrittes zwischen zwei aufeinanderfolgenden Taktimpulsen des Motors in einem Messzyklus mit M + N Zeiträumen definiert wird.

3. Testverfahren nach einem der vorstehenden Ansprüche, **dadurch gekennzeichnet, dass** in dem ersten und zweiten Schritt jeder der M Messzeiträume von geringerer Dauer als jeder der N Messzeiträume infolge der Inhibition einer bestimmten Anzahl an Impulsen in der Divisorschaltung (15) ist.

4. Testverfahren nach Anspruch 1, wobei die erste Anzahl M gleich 2 ist und die zweite Anzahl N gleich 4 ist, um einen Messzyklus nahe 6 Sekunden zu definieren, und wobei die Divisorschaltung (15) 15 Divisionsstufen umfasst, das heißt 15 Divisoren im Zweierpack, jeweils ausgehend von einem Ausgang des Referenzoszillators (14) bis zum Ausgang des Uhrenmoduls (2) aneinander angeschlossen, **dadurch gekennzeichnet, dass** in dem ersten Messschritt der erste Messzeitraum T1 und der zweite Messzeitraum T2 jeweils gleich der Frequenz des Referenzsignals des Oszillators (14) dividiert durch 2¹⁵ sind, dadurch, dass in dem zweiten Messschritt die ersten beiden Messzeiträume T3 und T4 der 4 Messzeiträume mit den 8 hochwertigen Bits N_{CT}[15..8] des Inhibitionswerts, die auf der zweiten Stufe der Divisorschaltung (15) bereitgestellt werden, jeweils gleich T1·((N_{CT}[15..8]/2¹⁴) + 1) sind, und dadurch, dass in dem zweiten Messschritt die letzten beiden Messzeiträume T5 und T6 der 4 Messzeiträume jeweils gleich T1 -((N_{CT}[7..0]/2¹⁴) + 1) sind.

5. Testverfahren nach einem der vorstehenden Ansprüche, **dadurch gekennzeichnet, dass** mehrere Messzyklen zur Bestimmung der Frequenz des Referenzsignals des Referenzoszillators (14) und zur Bestimmung des Inhibitionswerts durchgeführt werden.

6. Testverfahren nach einem der vorstehenden Ansprüche, **dadurch gekennzeichnet, dass** eine Temperaturmessung in Verbindung mit einer Wärmeausgleichsschaltung (17) des Inhibitionswerts der elektronischen Schaltung (4) in mindestens einem Messzeitraum des ersten und zweiten Messschrittes oder in jedem Messzeitraum durchgeführt wird.

7. Testverfahren nach Anspruch 6, **dadurch gekennzeichnet, dass** eine Stabilität der Gangfrequenz und der Temperatur über 5 doppelte Messzeiträume in dem ersten und zweiten Messschritt hinweg, nämlich für den ersten und zweiten Messzeitraum T1 + T2, für den zweiten und dritten Messzeitraum T2 + T3, für den dritten und vierten Messzeitraum T3 + T4, für den vierten und fünften Messzeitraum T4 + T5, und für den fünften und sechsten Messzeitraum T5 + T6 bewertet wird.

8. Testverfahren nach einem der vorstehenden Ansprüche, **dadurch gekennzeichnet, dass** eine Korrektur des Inhibitionswerts der Zeitbasisvorrichtung (1) am Ende des Testverfahrens durchgeführt werden kann.

9. Zeitbasisvorrichtung (1) einer elektronischen Uhr, die zur Umsetzung des Testverfahrens nach einem der vorstehenden Ansprüche passt, **dadurch gekennzeichnet, dass** die Zeitbasisvorrichtung (1) konfiguriert ist, um von einem normalen Funktionsmodus in einen Testmodus überzugehen, und ein Uhrenmodul (2) umfasst, das durch eine Energiequelle (20) versorgt wird, dadurch, dass das Uhrenmodul (2) einen Quarzresonator (3) umfasst, der an eine elektronische Schaltung (4) angeschlossen ist, die mit einem Referenzoszillator (14) versehen ist, der direkt an den Quarzresonator (3) angeschlossen ist, um ein Referenzsignal für eine Divisorschaltung (15) bereitzustellen, die eine Anzahl D an Divisionsstufen aufweist, wobei D eine ganze Zahl gleich oder größer als 1 ist, wobei die Divisorschaltung (15) durch eine Inhibitionsschaltung (16) kontrolliert wird, die durch einen Inhibitionswert (N_{CT}) gesteuert wird, der ein binäres Wort mit P Bits ist, wobei P eine ganze Zahl gleich 16 Bits ist, wobei die Inhibitionsschaltung (16) auf eine zweite Divisionsstufe der Divisorschaltung (15) wirkt, wobei die Inhibitionsschaltung (16) angeordnet ist, um 8 hochwertige Bits des Inhibitionswerts in ersten aufeinanderfolgenden Messzeiträumen bereitzustellen, und um 8 geringwertige Bits des Inhibitionswerts in zweiten aufeinanderfolgenden Messzeiträumen bereitzustellen, und ein Taktsignal mit dividierter Frequenz zur Steuerung mindestens eines Elektromotors (10, 11) bereitstellt.

10. Zeitbasisvorrichtung (1) nach Anspruch 9, **dadurch gekennzeichnet, dass** die Anzahl D an Divisionsstufen gleich 15 zur Division der Frequenz des Referenzsignals des Oszillators (14) anhand der Divisorschaltung (15) durch 15 Divisoren im Zweierpack in Reihe hindurch ist, um dem Elektromotor (10) das Impulstaktsignal bereitzustellen.

11. Zeitbasisvorrichtung (1) nach Anspruch 10, **dadurch gekennzeichnet, dass** der Inhibitionswert, der ein binäres Wort über 16 Bits ist, in einem Verzeichnis der elektronischen Schaltung (4) gespeichert wird, um der Inhibitionsschaltung (16) bereitgestellt zu werden, die auf die zweite Divisionsstufe wirkt.

12. Zeitbasisvorrichtung (1) nach Anspruch 9, **dadurch gekennzeichnet, dass** die Zeitbasisvorrichtung (1) konfiguriert ist, um durch die Wirkung eines Schalters (5) von Hand oder automatisch in einen Testmodus einzutreten.

13. Zeitbasisvorrichtung (1) nach Anspruch 9, **dadurch gekennzeichnet, dass** die Zeitbasisvorrichtung (1) einen Mikrocontroller (6) umfasst, der am Ausgang des Uhrenmoduls (2) angeschlossen ist, um zwei Elektromotoren (10, 11) zu steuern, und dadurch, dass der Mikrocontroller (6) vorgesehen ist, um ein automatisches Steuerungssignal an das Uhrenmodul (2) zu übertragen, um den Beginn und das Ende des Testmodus zu definieren, um es einem der Motoren zu ermöglichen, durch das durch das Uhrenmodul (2) bereitgestellte Taktsignal gesteuert zu werden.

14. Zeitbasisvorrichtung (1) nach Anspruch 9, **dadurch gekennzeichnet, dass** die elektronische Schaltung (4) einen Prozessor umfasst, um den Takt der Impulse eines Motors (10) direkt anzusteuern.

## Claims

1. Method for testing the rate of an electronic watch with a time base device (1) on test equipment (30), the time base device (1) being configured to be capable of changing from a normal operating mode to a test mode, and comprising at least one watch module (2) powered by an energy source (20), the watch module (2) comprising a quartz resonator (3) connected to an electronic circuit (4) provided with a reference oscillator (14) directly connected to the quartz resonator (3) to provide a reference signal to a divider circuit (15) having a number D of divider stages, where D is an integer number equal to or greater than 1, the divider circuit (15) being controlled by an inhibition circuit (16) controlled by an inhibition value (N_{CT}) and providing a timing signal with a divided frequency for the control of at least one electric motor (10, 11) or of a time display device,
**characterized in that** the test method includes the steps of:
- in a first step, measuring the frequency of the reference signal from the reference oscillator in a first number M of measurement periods without inhibition, where M is an integer number, which is equal to or greater than 1, and each measurement period is defined between two pulses of the timing signal,
- in a second step, acquiring the inhibition value (N_{CT}) for the inhibition circuit, the inhibition value (N_{CT}) being a P-bit binary word, where P is an integer number equal to 16 bits, which is provided to the inhibition circuit (16), in order to inhibit a certain number of pulses in the divider circuit (15), and measuring the frequency of a signal related to the reference signal with inhibition in a second number N of successive measurement periods with inhibition, where N is an integer number, which is equal to or greater than 1, the inhibition circuit (16) acting on a second divider stage of the divider circuit (15) during the N measurement periods, 8 high-order bits of the inhibition value N_{CT}[15..8] being first of all transmitted to the inhibition circuit (16) to act during one or more of the N measurement periods, whereas 8 low-order bits N_{CT}[7..0] of the inhibition value are transmitted to the inhibition circuit (16) to act during one or more successive remaining periods of the N measurement periods so as to determine the inhibition value by knowing the reference signal frequency, and
- in a third step, calculating the exact rate frequency of the time base device (1) via a dedicated algorithm in the test equipment (30) based on the measurements of the first and second steps after M + N measurement periods, which defines a measurement cycle.

2. Test method according to claim 1, wherein the time base device comprises at least one electric motor (10, 11) and the test equipment (30) is adapted to determine timing pulses for the electric motor by direct electric contact or by inductive coupling via an inductive coupling coil (31), **characterized in that** each of the M measurement periods and each of the N measurement periods of the first and second steps are defined between two successive timing pulses for the motor in a measurement cycle with M + N periods.

3. Test method according to any of the preceding claims, **characterized in that** in the first and second steps, each of the M measurement periods is of a shorter duration than each of the N measurement periods following the inhibition of a certain number of pulses in the divider circuit (15).

4. Test method according to claim 1, wherein the first number M is equal to 2, and the second number N is equal to 4 to define a measurement cycle close to 6 seconds, and wherein the divider circuit (15) includes 15 divider stages, i.e. 15 dividers-by-two connected one after the other from an output of the reference oscillator (14) to the output of the watch module (2), **characterized in that** in the first measurement step, the first measurement period T1 and the second measurement period T2 are each equal to the reference signal frequency of the oscillator (14) divided by 2¹⁵, **in that** in the second measurement step, the first two measurement periods T3 and T4 of the 4 measurement periods with the 8 high-order bits N_{CT}[15..8] of the inhibition value provided to the second stage of the divider circuit (15) are each equal to T1·((N_{CT}[15..8]/2¹⁴) + 1), and **in that** in the second measurement step, the last two measurement periods T5 and T6 of the 4 measurement periods are each equal to T1·((N_{CT}[7..0]/2¹⁴) + 1).

5. Test method according to any of the preceding claims, **characterized in that** several measurement cycles are effected for determination of the reference signal frequency of the reference oscillator (14) and determination of the inhibition value.

6. Test method according to any of the preceding claims, **characterized in that** a temperature measurement is effected in cooperation with a temperature compensation circuit (17) of the inhibition value of the electronic circuit (4) in at least one measurement period of the first and second measurement steps or in each measurement period.

7. Test method according to claim 6, **characterized in that** a stability of the rate frequency and of the temperature is evaluated over 5 double measurement periods in the first and second measurement steps, namely for the first and second measurement periods T1 + T2, for the second and third measurement periods T2 + T3, for the third and fourth measurement periods T3 + T4, for the fourth and fifth measurement periods T4 + T5, and for the fifth and sixth measurement periods T5 + T6.

8. Test method according to any of the preceding claims, **characterized in that** a correction of the inhibition value of the time base device (1) can be made at the end of the test method.

9. Time base device (1) for an electronic watch suitable for implementation of the test method according to any of the preceding claims, **characterized in that** the time base device (1) is configured to be able to change from a normal operating mode to a test mode, and comprises at least one watch module (2) powered by an energy source (20), **in that** the watch module (2) includes a quartz resonator (3) connected to an electronic circuit (4) provided with a reference oscillator (14) directly connected to the quartz resonator (3) to provide a reference signal to a divider circuit (15) having a number D of divider stages (15), wherein D is an integer number equal to or greater than 1, the divider circuit (15) being controlled by an inhibition circuit (16) controlled by an inhibition value (N_{CT}), which is a P-bit binary word, where P is an integer number equal to 16 bits, the inhibition circuit (16) acting on a second divider stage of the divider circuit (15), the inhibition circuit (16) being arranged to provide 8 high-order bits of the inhibition value in first successive measurement periods and to provide 8 low-order bits of the inhibition value in second successive measurement periods, and providing a divided frequency timing signal to control at least one electric motor (10, 11).

10. Time base device (1) according to claim 9, **characterized in that** the number D of divider stages is equal to 15 for dividing the reference signal frequency of the oscillator (14) via the divider circuit (15) through 15 dividers-by-two in series to provide the timing pulse signal to the electric motor (10).

11. Time base device (1) according to claim 10, **characterized in that** the inhibition value, which is a 16-bit binary word, is stored in a register of the electronic circuit (4) to be provided to the inhibition circuit (16), which acts on the second divider stage.

12. Time base device (1) according to claim 9, **characterized in that** the time base device (1) is configured to enter a test mode manually or automatically by the action of a switch (5).

13. Time base device (1) according to claim 9, **characterized in that** the time base device (1) comprises a microcontroller (6) connected at output to the watch module (2) to control two electric motors (10, 11), and **in that** the microcontroller (6) is arranged to transmit an automatic control signal to the watch module (2) to define the start and the end of the test mode, so as to allow one of the motors to be controlled by the timing signal provided by the watch module (2).

14. Time base device (1) according to claim 9, **characterized in that** the electronic circuit (4) comprises a processor to directly control the timing of the pulses for a motor (10).
